# EUROPEAN PATENT SPECIFICATION

(11) **EP 1 618 931 B1**
(45) Date of publication and mention of the grant of the patent: **05.08.2009**
(21) Application number: 03782880.3
(22) Date of filing: 24.12.2003
(51) Int. Cl.: A63F 13/12, A63F 13/10

(54) **GAME DEVICE AND GAME PROGRESSING METHOD USING THE SAME**
SPIELVORRICHTUNG UND SPIELVERARBEITUNGSVERFAHREN UNTER EINSATZ DERSELBEN
DISPOSITIF DE JEU ET PROCEDE DE GESTION DE LA PROGRESSION D'UN JEU AU MOYEN DUDIT DISPOSITIF

(30) Priority: 19.03.2003 JP 2003075627
(43) Date of publication of application: 25.01.2006
(73) Proprietor: Konami Corporation, Chiyoda-ku, Tokyo 100-6330 (JP)
(72) Inventor: OKAMURA, N., Tokyo 106-6112 (JP)
(74) Representative: Hengelhaupt, Jürgen
(86) International application number: PCT/JP2003/016543
(87) International publication number: WO 2004/082790

(56) References cited:
- EP-A2- 1 086 731
- WO-A-01/31476
- JP-A- 5 046 656
- JP-A- 10 328 416
- JP-A- 2002 066 141
- JP-A- 2002 126 351
- JP-A- 2002 369 970
- US-A1- 2001 027 130

## Description

### TECHNICAL FIELD

This invention relates to a game machine for playing a game with terminal units which can be connected with a public communication network, such as the Internet, and through which an E-mail can be sent and received.

### BACKGROUND ART

In recent years, a so-called on-line game to be played, connecting a terminal unit, such as a game machine for home use, a personal computer, and a mobile phone, with a public communication network, such as the Internet, spreads. Such on-line games are pitched battle type of games, role playing games
wherein a plurality of persons has the same scenario and the like. In any game, various kinds of data necessary for advancing the game are sent to and received by a server or the other terminal unit for controlling the game, and the game proceeds according to the data which were sent and received.

In order to play such an on-line game, it is necessary to send and receive various kinds of data through the Internet. For sending and receiving the the various kinds of data for advancing the game, a program is necessary to be booted with a game machine for home use or a personal computer so as to process the data for sending and receiving. For this reason, a game program is necessary to be prepared for a player prior to playing the game, and the player can not easily start the game.

And, in order to play the on-line game, a capacity for executing the program of the game to be played and a storage medium for storing the program are necessary for the terminal unit. Then, only an easy game can be played with a mobile phone due to the problem of capacity or storage capacity, and a player can not play the game having many funs therewith.

Under this situation, a game machine for easily starting a game for a player and for playing a game having many interests even with a mobile phone, and a method of advancing the game with the game machine are still be desired to be developed.

International patent application WO 01/31476 A1 discloses system for providing a game to be played between a plurality of players over a network. The system includes server means in communication with the network and adapted to receive first and second turn requests from respective first and second players and to send first and second turn information corresponding to the first and second turn requests to the second and first players, respectively. Further the system comprises a server engine in communication with the server means and adapted to process the first and second turn requests to become first and second turn information. The first and second turn information enables the first and second players to send and receive subsequent turn requests directly to and from each other.

Japanese patent application JP 2002 066141 A1 discloses a game method and a system device using e-mail to enable a player to play a game using the contents of emails. The system device is equipped with a mail document analyzing part to analyze the contents of an e-mail received by a player. A data production instructing part converts the analyzing results into game data. The player is informed on the progress of the game by means of reply emails prepared and sent by the game system.

### DISCLOSURE OF INVENTION

One aspect of the invention is a game machine having receiving means for receiving an e-mail and sending means for sending said e-mail, said game machine being connected with a public communication network, comprising;
progress state controlling means for storing and controlling a state of a progress of a story in a game for each player;
player identification means for identifying a player from an origin of said e-mail received through said receiving means;
instruction obtaining means for analyzing contents of a sentence of said received mail so as to obtain as instruction information;
story processing means for judging said state of said progress of said story corresponding to said player, said player being identified by said player identification means, and for processing a
development of said story in said game on the basis of said judged state of said progress and said instruction information;
reply mail preparing means for preparing a reply mail for sending information in response to said instruction information according to said development of said story processed by said story processing means; and
reply mail processing means for sending said reply mail prepared by said reply mail preparing means to said player identified by said player identification means through said sending means.

According to this aspect of the invention, the instruction obtaining means analyzes contents of the sentence in the received mail so as to obtain as instruction information, the state of the progress of the story corresponding to the player is judged by the story processing means, the development of the story in the game is processed on the basis of the judged state of the progress and the instruction information, the reply mail to be sent as information in response to the instruction information is prepared on the basis of the development of the story which was processed by the reply mail preparing means, and the reply mail prepared by the reply mail processing means is sent to the player, so that the player can easily start the game and play the game without preparing a game program as long as the player has the terminal unit through which an E-mail can be sent and received. Besides, the terminal unit is not necessary to have a game program. So, the game with a lot of funs can be played with the mobile phone even if the capacity or storage capacity thereof is low.

Another aspect of the invention is the game machine further comprising corresponding word storing means for storing information of a plurality of words which corresponds to said instruction information,
wherein said instruction obtaining means has sentence analyzing means for analyzing said contents of said sentence of said received mail by checking said contents of said sentence of said received mail and said information of a plurality of said words which is stored in said corresponding word storing means.

According to this aspect of the invention, the sentence analysis means analyzes the contents of the received mail by checking the contents of the received mail and a plurality of words corresponding to the instruction information, so that the instruction information can be easily obtained by the received mail.

Besides, another aspect of the invention is the game machine further comprising error judging means for judging that said instruction obtaining means is impossible to analyze said contents of said sentence of said received mail, and error mail preparing means for preparing an error mail when impossibility of said analysis of said contents of said sentence of said received mail being judged by said error judging means, wherein said reply mail processing means sends said error mail prepared by said error mail preparing means to said player identified by said player identification means through said sending means.

According to this aspect of the invention, the error judging means judges impossibility of analysis of the contents of the received mail, and the error mail preparing means prepares and sends the error mail, so that the player can confirm that the development of the story has not been processed, and can play the game smoothly.

Another aspect of the invention is the game machine further comprising reply time processing means for computing time for sending said reply mail prepared by said reply mail preparing means on the basis of said development of said story processed by said story processing means, and for allowing said reply mail processing means to send said reply mail when it comes said time to send.

According to this aspect of the invention, the reply time processing means computes time for sending the reply mail according to the processing of the development of the story, and allows the reply mail processing means to send the reply mail when it comes time to send, so that the development of the story in the game can be matched with the actual time so as to feel for the player that the story in the game is in the actual world. Another aspect of the invention is the game machine,
wherein said reply mail preparing means prepares said reply mail with a predetermined image being attached on the basis of said development of said story processed by said story processing means.

According to this aspect of the invention, at the time of preparing the reply mail, the reply mail preparing means prepares the reply mail with a predetermined image information attached on the basis of the processing of the development of the story, so that the player can confirm the development of the story with the image in addition to sentences, thereby increasing the funs of the game.

Another aspect of the invention is the game machine, further comprising web processing means for distributing various kinds of information, said web processing means being connected with said public communication network, and distributing word information producing means for producing said information of a plurality of words which is stored in said corresponding word storing means as distributing word information which can be distributed through said web processing means.

According to this aspect of the invention, the distributing word information producing means produces information of a plurality of words which is stored in the corresponding word storing means as the word information to be distributed through the web processing means, so that the player can obtain the word information through a public communication network, and the player can prepare an E-mail on the basis of this word information so as to analyze the sentence for the instruction obtaining means and to obtain the instruction information, thereby smoothly playing the game.

Another aspect of the invention is the game machine, further comprising web processing means for distributing various kinds of information, said web processing means being connected with said public communication network, and ranking computing means for computing ranking of said player in said game on the basis of said state of said progress of said story for each player which is stored in and controlled by said progress state controlling means, and ranking information producing means for producing said ranking of said player computed by said ranking computing means as ranking information which can be distributed through said web processing means.

According to this aspect of the invention, the ranking computing means computes the ranks of the players in the game according to the state of the progress of the story for each player which is stored in and controlled by the proceeding control means, and the rank information producing means produces the ranks of the players as the rank information to be distributed through the web processing means, so that the player can obtain the ranking information through the public communication network. Then, the player can confirm the player's own rank or the players in the upper rank, thereby giving the player a willing for advancing the game.

Another aspect of the invention is a method of advancing a game with a plurality of terminal units for sending and receiving an e-mail through a player, said terminal units being connected with a public communication network, and said game machine according to claim 1, comprising;
storing and controlling a state of a progress of a story in said game for each player by said progress state controlling means;
identifying said player by said player identification means by an origin of said received e-mail when receiving said e-mail by said receiving means from one of said terminal units;
analyzing contents of a sentence of said received e-mail so as to obtain as instruction information by said instruction obtaining means;
judging said state of said progress of said story corresponding to said player which was identified by said player identification means and processing a development of said story in said game on the basis of said judged state of said progress and said instruction information by said story processing means;
preparing a reply mail for sending information in response to said instruction information on the basis of said processing of said development of said story by said reply mail preparing means; and
sending said reply mail prepared by said reply mail preparing means to said player which was identified by said player identification means by said reply mail processing means through said sending means.

According to this aspect of the invention, when providing the game machine 1 and a plurality of terminal units which are connected with the public communication network, and through which an E-mail can be sent and received by the player, the contents of the sentence of the E-mail obtained by the instruction obtaining means can be analyzed so as to obtain as instruction information, the story processing means can judge the state of the progress of the story corresponding to the player, the development of the story in the game can be processed on the basis of the judged state of the progress and the instruction information, the reply mail preparing means can prepare information in response to the instruction information as the reply mail on the basis of the processing of the development of the story, and the reply mail processing means can send the reply mail prepared by the reply mail preparing means to the player through the sending means so as to advance the game. Therefore, the player can easily start the game and play the game without preparing the game program.

Another aspect of the invention is the method of advancing said game wherein said terminal unit is a mobile phone.

According to this aspect of the invention, the terminal unit is the mobile phone , so that the player can easily start the game and can enjoy the game, and can play the game in any place which the player wishes.

### BRIEF DESCRIPTION OF DRAWINGS

Fig.1 is a typical view showing a communication network equipment to which the invention can be applied;
Fig.2 is a block diagram showing a game machine 1.

### BEST MODE FOR CARRYING OUT THE INVENTION

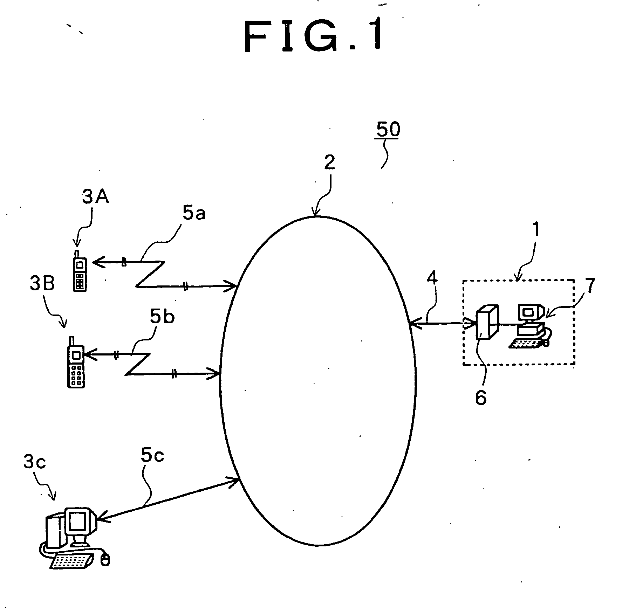

A communication network equipment 50 to which the invention can be applied is now explained, referring to Fig.1. As shown in Fig.1, the communication network equipment 50 has an Internet 2 which is an instance of a public communication network, and mobile phones 3A, 3B which are terminal units 3 are connected with the Internet 2 through electric wave lines 5a, 5b, and a personal computer 3C which is the terminal unit 3 is connected therewith through a communication line 5c.

And, a game machine 1 is connected with the Internet 2 through a communication line 4, and the game machine 1 has a server 6 for operating a mail server to send and receive an E-mail and a web server to access in webs, and a computer 7 connected with the server 6.

Any communication line 5c, 4, such as a digital line, an analogue line, an optical cable line, is available as long as communication between such line and the Internet 2 is possible.

An E-mail can be sent and received with the mobile phones 3A, 3B and the personal computer 3C, and a proper E-mail address which is necessary at the time of sending and receiving an E-mail is given to each of the mobile phones and the personal computer. Similarly, a proper E-mail address is also given to the sever 6 of the game machine 1.

When sending an E-mail from the mobile phones 3A, 3B or the personal computer 3C to the E-mail address of the server 6, for instance, the E-mail is sent to a sending server, such as an iDC for mobile phone (Internet data center) and a provider, and is received by the server 6 according to the E-mail address through the Internet 2.

When sending an E-mail from the server 6 to the E-mail address of the mobile phones 3A, 3B or the personal computer 3C, for instance, the E-mail is sent to a receiving server, such as an iDC for mobile phone (Internet data center) and a provider (not shown) through the Internet 2, and is sent to the mobile phones 3A, 3B or the personal computer 3C from the receiving server, and is received thereby.

In the embodiment as shown in Fig.1, the mobile phones 3A, 3B and the personal computer 3C are connected with the Internet 2. But, many mobile phones and many computers may be connected therewith . Besides, game machines for home use and mobile units may be connected therewith. In other words, any number of any terminal units may be connected therewith as long as an E-mail can be sent and received through such a terminal unit.

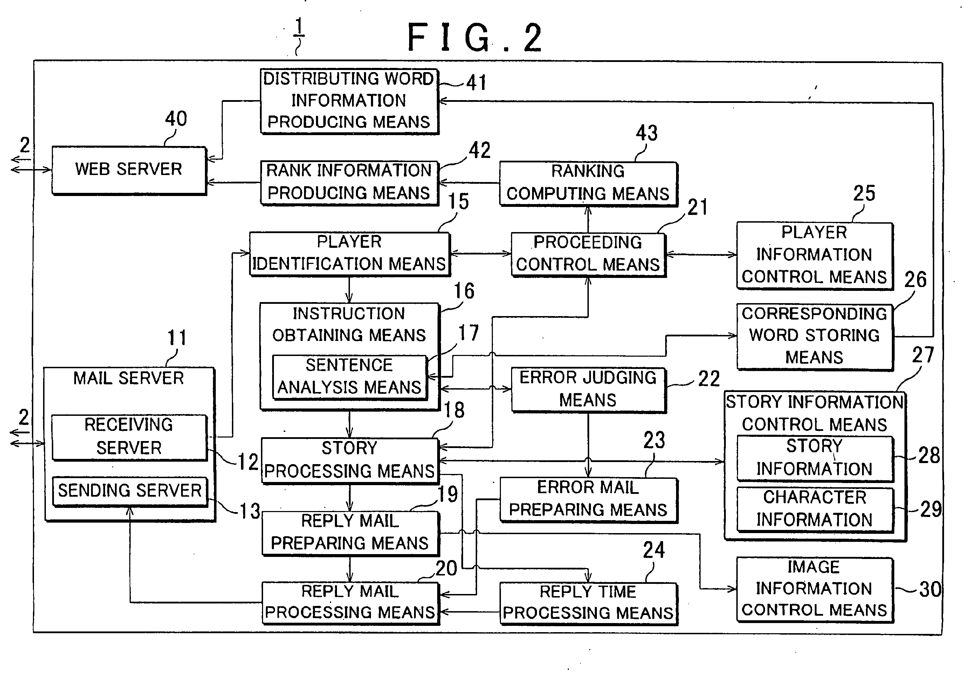

The game machine 1 which is the important part of the invention is now explained, referring to Fig.2. As shown in Fig. 2, the game machine 1 has a mail server 11 connected with the Internet 2 in the server 6, and the mail server 11 has a receiving server (receiving means) 12 for receiving an E-mail from the mobile phones 3A, 3B and the personal computer 3C, and a sending server (sending means) 13 for sending an E-mail to the mobile phones 3A, 3B and the personal computer 3C. And, the game machine 1 has a web server (web processing means) 40 connected with the Internet 2 for delivering (for downloading) various kinds of web information when accessing it through the mobile phones 3A, 3B and the personal computer 3C in the server 6.

The game machine 1 has a player identification means 15, an instruction obtaining means 16 having a sentence analysis means 17 therein, a story processing means 18, a reply mail preparing means 19, a replay mail preparing means 20, a proceeding control means 21, an error judging means 22, an error mail preparing means 23, a replay time processing means 24, a player information control means (proceeding control means) 25, a corresponding word storing means 26, a story information control means (story processing means) 27 for controlling a story information 28 and a character information 29, and an image information control means 30 in the computer 7. Besides, the game machine 1 has in the computer 7 a distributing word information producing means 41, a rank information producing means 42 and a ranking computing means 43.

Each arrow connected between the respective means in Fig. 1 is only for easy understanding of the invention, so that exchanges of information and processing between the respective means are not limited by these arrows.

Operations of the game machine 1 according to the invention are now explained, referring to Fig.2. The game in the game machine 1 which is now explained is a so-called adventure game which has the story information 28 wherein a player, a detective, is instructed to search a criminal in a case together with a character in the game.

When initial status explanation of the game being published on a magazine or a predetermined homepage, for instance, each player who wishes to play this game by watching the publication accesses a predetermined homepage through the mobile phones 3A, 3B or the personal computer 3C and sets (registers) an E-mail address to be used in the mobile phones 3A, 3B or the personal computer 3C on the web.

Then, a proper E-mail address (that is, the E-mail address of the mobile phones 3A, 3B or the personal computer 3C) and a proper story proceeding status for a player (that is, the story proceeding status for each E-mail address of the mobile phones 3A, 3B and the personal computer 3C) which are to be stored in and controlled by the player information control means 25 are set (registered) in a memory medium (not shown) such as a hard disc. The story proceeding status at this time is set as "initial status".

After finish of setting (register) in the player information control means 25, the story processing means 18 may process such that the story proceeding status is in "the initial status", the reply mail preparing means 19 may prepare a replay mail for requesting an initial instruction, and the replay mail processing means 20 may send the reply mail to the mobile phones 3A, 3B or the personal computer 3C through the sending server 13.

Any method of first setting a state of a progress of the story for each player is available as long as the state of the progress of the story for the player who wants to play the game can be set as "the initial state". For instance, an E-mail address of the game machine 1 is published and the player sends an E-mail showing the player wants to play so as to set the state of the progress of the story for each player as "the initial state". Alternatively, a letter showing the player is willing to play is sent via a mail and then, an operator operates the computer 7 so as to set.

When finishing setting (register) in the player information control means 25, each player can start to play the game. If the player having the mobile phone 3A starts to play the game, the player prepares an E-mail having sentences of instructing a character in the game and send this to the e-mail address of the game machine 1 in order to develop a story of the game.

Preferably, the e-mail prepared by the player can be analyzed by the sentence analyze means 17 of the instruction obtaining means 16, which is mentioned hereinafter. Then, the distributing word information producing means 41 produces information of a plurality of words which is stored in the corresponding word storing means 26, corresponding to instruction information as word information to be informed so as to be displayed on a predetermined homepage in the shape of a list so that it can be informed through the web server 40, that is, so that is can be confirmed when accessing the web server 40 from the mobile phone 3A (or the mobile phone 3B or the personal computer 3c).

The above-mentioned information of a plurality of words is comprised of a plurality of words to be used as instruction information, that is, words of character name, such as "Mr.A", "Ms.B", "Miss.C", words of place name, such as "the scene of an offense", "... office", "... police station", words of noun, such as "knife", "article left", "photograph", words of verb, such as "gone", "taken", "sent", and words indicating time, such as "one o'clock", "half past one", "two", and the corresponding word storing means 26 controls the word information together with information of player's instruction (so-called "command") which corresponds to each word.

The word information may be informed with a list in a predetermined homepage. Besides, it may be downloaded as dictionary conversion information or stereotyped sentence information in each terminal unit 3.

If the player having the mobile phone 3A prepares "Mr. A, go to the scene of the offense at two" as an E-mail and send it to the E-mail address of the game machine 1, the receiving server 12 receives it (this E-mail will be referred to as "the receiving mail" hereinafter) through the Internet 2. Then, the player having the mobile phone 3A is identified as an origin of the receiving mail (the E-mail address of the mobile phone 3A) by the player identification means 15. When the player having the mobile phone 3A being identified, the proceeding control means 21 obtains a state of a progress of story which corresponds to the player out of information of progresses of the respective players which is controlled by the player information control means 25 so as to judge the state of the progress of the player.

On the other hand, the sentence analysis means 17 of the instruction obtaining means 16 divides the above-mentioned E-mail into a plurality of words, such as "Mr. A", "go", "to a scene of the offense", "at two", and checks the E-mail against the information of a plurality of words stored in the corresponding word storing means 26 so as to analyze the contents of the sentence. The instruction obtaining means 16 obtains instructions (commands) corresponding to the respective words with this analysis and collectively processes a plurality of instructions (commands) related to a plurality of words, so that it can obtain the receiving mail as instruction information.

When thus obtaining the instruction information from the receiving mail by the instruction obtaining means 16, the story processing means 18 processes the development of the story of the game on the basis of the obtained instruction information and the state of the progress of the story judged by the proceeding control means 21, referring to the story information 28 and the character information 29 which are controlled by the story information control means 27.

The story processing means 18 judges as to whether or not Mr.A can go to the scene of the offence at two in the game on the basis of the instruction information obtained from the receiving mail and the state of the development of the story in the last processing. When the judgment is yes, it processes future story which can be developed by getting Mr.A to go to the scene of the offense at two. On the contrary, if Mr. A can not go to the scene of the offense at two according to the last processing on the development of the story, that is, if Mr. A is taking the other action in the game or is at a place remote to the scene of the offense, it processes future story which can be developed by getting Mr. A not to go to the scene of the offense at two. The result processed by the story processing means 18 is controlled by the proceeding control means 21 and is stored in the player information control means 25 as the state of the progress of the story for the player who has the mobile phone 3A.

Subsequently, the reply mail preparing means 19 prepares information of reply in response to the instruction information obtained from the receiving mail according to the development of the story processed by the story processing means 18 as a reply mail. That is, in the processing by the story processing means 18, a reply mail "I see" if Mr. A can go to the scene of the offence at two, or the reply mail "It' s impossible" if not is prepared, and the reply mail prepared is outputted to the reply mail processing means 20. At the same time, the reply mail "just received" is also prepared if yes so as output to the reply mail processing means 20.

And, the reply mail processing means 20 sends the reply mail prepared by the reply mail preparing means 19 to the mobile phone 3A through the sending server 13. At this time, the reply time processing means 24 computes a time for sending the reply mail to the mobile phone 3A on the basis of the development of the story processed by the story processing means 18 for each reply mail, and allows the reply mail processing means 20 to send the reply mail when it comes time to send the reply mail.

That is, the reply time processing means 24 immediately allows the reply mail processing means 20 on the basis of the processing by the story processing means 18 to send the reply mail which is not related to time in the development of the story, such as "I see" or "It's impossible", and the reply mail processing means 20 immediately sends the reply mail to the mobile phone 3A. On the other hand, the reply time processing means 24 does not allow the reply mail processing means 20 on the basis of the processing of the story processing means 18 to send the reply mail which is related to time in the development of the story, such as "just reached" before two o'clock in the actual time and allows at two o'clock, so that the replay mail is sent to the mobile phone 3A by the reply mail processing means 20.

Subsequently, for instance, the player having the mobile phone 3B prepare "Ms. B, send a photograph of ... office to me" as an E-mail, and send it to the E-mail address of the game machine 1, and the receiving server 12 receives it as the received mail through the Internet 2. Then, the player having the mobile phone 3B is identified as an origin of the received mail (that is, the E-mail address of the mobile phone 3B) by the player identification means 15, and the proceeding control means 21 obtains a state of a progress of story which corresponds to the player out of information of progresses of the respective players which is controlled by the player information control means 25 so as to judge the state of the progress of the player.

And, the sentence analysis means 17 of the instruction obtaining means 16 checks the received mail and the information of a plurality of words which is stored in the corresponding word storing means 26 so that the contents of the sentence can be analyzed, and with this analysis, the instruction obtaining means 16 obtains the received mail as instruction information. The story processing means 18 processes the story of the game to be developed by sending a photograph of ... office by Ms. B according to the obtained instruction information and the state of the progress of the story judged by the proceeding control means 21, referring to the story information 28 and the character information 29 which are controlled by the story information control means 27.

Subsequently, the reply mail preparing means 19 prepares the reply mail, such as "I will send a photograph of ... office" as information in response to the instruction information obtained from the received mail on the basis of the development of the story processed by the story processing means 18. At this time, the reply mail preparing means 19 obtains an image of "... office" out of a plurality of images controlled by the image information control means 30 which are related to the story of the game, and attaches the image to the replay mail as an attached file.

Such an image is not always attached by the reply mail preparing means 19 on the basis of the instruction information from the player (contents of sentence of received mail). Preferably, when the story processing means 18 develops the story, such as when a new accident happens, a predetermined image is attached according to the development of the story.

The reply mail processing means 20 immediately allows the reply time processing means 24 to send the above-mentioned reply mail since it does not relate to time, and the reply mail with the above-mentioned image attached by the reply mail preparing means 19 is sent to the mobile phone 3B through the sending server 13.

If the player having the personal computer 3C prepares a sentence "ABCDEFGHIJ..." as an E-mail and sends it to the E-mail address of the game machine 1, the receiving server 12 receives it as a received mail through the Internet 2. Then, the player having the personal computer 3C is identified as an origin of the received mail (the E-mail address of the personal computer 3C) by the player identification means 15.

Subsequently, the sentence analysis means 17 of the instruction obtaining means 16 checks the above-mentioned received mail and the information of a plurality of words which is stored in the corresponding word storing means 26 so as to analyze the contents of the sentence. But, the instruction obtaining means 16 is impossible to analyze this received mail and impossible to obtain instruction information from the received mail since there is no word corresponding to the received mail. Then, the error judging means 22 judges that the instruction obtaining means 16 can not analyze the contents of the sentence of the received mail, and receiving this judgment, the error mail preparing means 23 prepares an error mail, such as "I don't know. Please send again.".

The reply mail processing means 20 immediately allows the reply time processing means 24 to send the error mail since it is not related to time, and the reply mail preparing means 19 sends this error mail to the personal computer 3C through the sending server 13 . In such a case, the story processing means 18 does not develop the story since the instruction obtaining means 16 is impossible to obtain instruction information.

As mentioned before, the story proceeds in such a manner that each player sends an E-mail to the game machine 1, the development of the story is processed, with the state of the progress of the story being controlled every each player, a reply mail (error mail) is prepared on the basis of the development of the story, and each player receives the reply mail (error mail).

On the other hand, the ranking computing means 43 computes a rank of each player in the game according to the state of the progress for each player which is stored in and controlled by the proceeding control means 21 and the player information control means 25, and the rank information producing means 42 produces the computed ranks of the players as ranking
information so as to show a ranking list on a predetermined homepage. In other words, when accessing the predetermined homepage by each player, the above-mentioned ranking list can be obtained through the Internet 2 and the web server 40. That is, when accessing the web server 40 from the mobile phones 3A, 3B or the personal computer 3C, each player can see the ranking list.

The ranking information produced by the rank information producing means 42 includes ranking information for all players. But, this information may include only a rank for a player who accesses the web server 40, or may include only ranks for the players in upper rank (that is, the players whose progresses of the story are faster).

According to the game machine 1 in the invention, the instruction obtaining means 16 analyzes contents of the sentence in the received mail so as to obtain as instruction information, the state of the progress of the story corresponding to the player is judged by the story processing means 18 and the story information control means 27, the development of the story in the game is processed on the basis of the judged state of the progress and the instruction information, the reply mail to be sent as information in response to the instruction information is prepared on the basis of the development of the story which was processed by the reply mail preparing means 19, and the reply mail prepared by the reply mail processing means 20 is sent to the player, so that the player can easily start the game and play the game without preparing a game program as long as the player has the terminal unit 3 through which an E-mail can be sent and received. Besides, the terminal unit 3 is not necessary to have a game program. So, the game with a lot of funs can be played with the mobile phone 3A, 3B even if the capacity or storage capacity thereof is low.

And, the sentence analysis means 17 analyzes the contents of the received mail by checking the contents of the received mail and a plurality of words corresponding to the instruction information, so that the instruction information can be obtained from the received mail.

Besides, the error judging means 22 judges impossibility of analysis of the contents of the received mail, and the error mail preparing means 23 prepares and sends the error mail, so that the player can confirm that the development of the story has not been processed, and can play the game smoothly.

Furthermore, the reply time processing means 24 computes time for sending the reply mail according to the processing of the development of the story, and allows the reply mail processing means 20 to send the reply mail when it comes time to send, so that the development of the story in the game can be matched with the actual time so as to feel for the player that the story in the game is in the actual world.

And, at the time of preparing the reply mail, the reply mail preparing means 19 prepares the reply mail with a predetermined image information attached on the basis of the processing of the development of the story, so that the player can confirm the development of the story with the image in addition to sentences, thereby increasing the funs of the game.

Besides, the distributing word information producing means 41 produces information of a plurality of words which is stored in the corresponding word storing means 26 as the word information to be delivered through the web server 40, so that the player can obtain the word information through the Internet 2, and the player can prepare an E-mail on the basis of this word information so as to analyze the sentence for the instruction obtaining means 16 and to obtain the instruction information. Then, the instruction obtaining means 16 does not fail to obtain the instruction information, thereby smoothly playing the game.

Furthermore, the ranking computing means 43 computes the ranks of the players in the game according to the state of the progress of the story for each player which is stored in and controlled by the proceeding control means 21 and the player information control means 25, and the rank information producing means 42 produces the ranks of the players as the rank information to be distributed through the web server 40, so that the player can obtain the ranking information through the Internet 2. Then, the player can confirm the player's own rank or the players in the upper rank, thereby giving the player a willing for advancing the game.

When providing the game machine 1 and a plurality of terminal units 3 which are connected with the Internet 2, and through which an E-mail can be sent and received by the player, the contents of the sentence of the E-mail obtained by the instruction obtaining means 16 can be analyzed so as to obtain as instruction information, the story processing means 18 and the story information control means 27 can judge the state of the progress of the story corresponding to the player, the development of the story in the game can be processed on the basis of the judged state of the progress and the instruction information, the reply mail preparing means 19 can prepare information in response to the instruction information as the reply mail on the basis of the processing of the development of the story, and the reply mail processing means 20 can send the reply mail prepared by the reply mail preparing means 19 to the player through the sending server 13 so as to advance the game. Therefore, the player can easily start the game and play the game without preparing the game program.

Furthermore, the terminal unit 3 is the mobile phone 3A, 3B, so that the player can easily start the game and can enjoy the game, and can play the game in any place which the player wishes.

In the above-mentioned embodiment of the invention, the game machine 1 has the story information 28 of a so-called adventure game wherein a player, a detective, is instructed to search a criminal in a case together with a character in the game. But, the invention can be applied to any game, such as the other adventure games and role playing games as long as the game can be played with E-mails.

### INDUSTRIAL APPLICABILITY

The invention can be applied to a game machine and a game method utilizing a public communication network, such as the Internet.

## Claims

1. A game machine (1) for a client-server based game system, said game machine (1) having receiving means (12) for receiving an e-mail and sending means (13) for sending an e-mail, said game machine (1) being connected with a public communication network, comprising;
a. progress state controlling means for storing and controlling a state of a progress of a story in a game for each player;
b. player identification means (15) for identifying a player from an origin of an e-mail sent by said player received through said receiving means (12);
c. distributing word information producing means (41) for producing information consisting of a plurality of words, said information being stored in a corresponding word storing means (26),
d. a web server (40) for delivery of said word information, so that a player can obtain said word information through the Internet (2) being an instance of said public communication network, and the player can prepare an instruction e-mail on the basis of said word information,
e. instruction obtaining means (16) for analyzing contents of a sentence of an instruction e-mail sent by a player received by said receiving means (12), said sentence being so as to obtain as instruction information;
f. story processing means (18) for judging said state of said progress of said story corresponding to said player, said player being identified by said player identification means (16), and for processing a development of said story in said game on the basis of said judged state of said progress and said instruction information;
g. reply mail preparing means (19) for preparing a reply mail for sending information in response to said instruction information according to said development of said story processed by said story processing means (18); and
h. reply mail processing means (20) for sending a reply e-mail prepared by said reply mail preparing means (19) to said player identified by said player identification means (15) through said sending means (13).

2. The game machine (1) according to claim 1, wherein said information of a plurality of words stored in said word storing means (26) corresponds to said instruction information, wherein said instruction obtaining means (16) has sentence analyzing means for analyzing said contents of said sentence of said received mail by checking said contents of said sentence of said received mail and said information consisting of a plurality of said words which is stored in said corresponding word storing means (26).

3. The game machine (1) according to claim 1, further comprising error judging means (22) for judging that said instruction obtaining means (16) is impossible to analyze said contents of said sentence of said received mail, and error mail preparing means (23) for preparing an error mail when impossibility of said analysis of said contents of said sentence of said received mail being judged by said error judging means (22), wherein said reply mail processing means (20) sends said error mail prepared by said error mail preparing means (23) to said player identified by said player identification (15) means through said sending means (13).

4. The game machine (1) according to claim 1, further comprising reply time processing means (24) for computing time for sending said reply mail prepared by said reply mail preparing means (19) on the basis of said development of said story processed by said story processing means (18), and for allowing said reply mail processing means (19) to send said reply mail when it comes said time to send.

5. The game machine (1) according to claim 1, wherein said reply mail preparing means (19) prepares said reply mail with a predetermined image being attached on the basis of said development of said story processed by said story processing means (18).

6. The game machine according to claim 1, further comprising web processing means (40) for distributing various kinds of information, said web processing means (40) being connected with said public communication network, and ranking computing means (43) for computing ranking of said player in said game on the basis of said state of said progress of said story for each player which is stored in and controlled by said progress state controlling means, and ranking information producing means (42) for producing said ranking of said player computed by said ranking computing means (43) as ranking information which can be distributed through said web processing means (40).

7. A method of advancing a game with
a. a plurality of terminal units (3A, 3B, 3C) for sending and receiving an e-mail through a player, said terminal units (3A, 3B, 3C) being connected with a public communication network, and
b. said game machine according (1) to claim 1, the method comprising:
c. producing information consisting of a plurality of words,
d. publishing said information consisting of a plurality of words by means of a web server (40), so that a player can obtain said word information through the Internet (2), and the player can prepare an instruction e-mail on the basis of said word information,
e. storing and controlling a state of a progress of a story in said game for each player by said progress state controlling means;
f. receiving an instruction e-mail sent by a player from one of said terminal units (3A, 3B, 3C);
g. identifying said player by said player identification means (15) by the origin of said received instruction e-mail;
h. analyzing contents of a sentence of said received instruction e-mail so as to obtain as instruction information by said instruction obtaining means (16);
i. judging said state of said progress of said story corresponding to said player which was identified by said player identification means (15) and processing a development of said story in said game on the basis of said judged state of said progress and said instruction information by said story processing means (18);
j. preparing a reply mail for sending information in response to said instruction information on the basis of said processing of said development of said story by said reply mail preparing means (19); and
k. sending said reply mail prepared by said reply mail preparing means (19) to said player which was identified by said player identification means (15) by said reply mail processing means (20) through said sending means (13).

8. The method of advancing said game according to claim 7 wherein said terminal unit (3A, 3B) is a mobile phone.

## Patentansprüche

1. Eine Spielmaschine (1) für ein Client-Server-basiertes Spielsystem, wobei besagte Spielmaschine (1) Empfangsmittel (12) zum Empfangen einer E-Mail sowie Sendemittel (13) zum Senden einer E-Mail aufweist, wobei besagte Spielmaschine (1) mit einem öffentlichen Kommunikationsnetzwerk verbunden ist, umfassend;
a. Fortschrittsstatus-Steuermittel zum Speichern und Steuern eines Status eines Fortschritts einer Geschichte in einem Spiel für jeden Spieler;
b. Spieleridentifizierungsmittel (15) zum Identifizieren eines Spielers anhand eines Ursprungs einer von besagtem Spieler gesendeten und von besagtem Empfangsmittel (12) empfangenen E-Mail;
c. Verteilungswortinformationsproduktionsmittel zum Produzieren von Informationen, die aus einer Vielzahl von Wörtern bestehen, wobei besagte Informationen in einem entsprechenden Wortspeichermittel (26) gespeichert werden,
d. einen Webserver (40) zum Liefern besagter Wortinformationen, so dass ein Spieler besagte Wortinformationen über das Internet (2) erhalten kann, das eine Instanz des besagten öffentlichen Kommunikationsnetzwerkes darstellt, und der Spieler auf der Basis besagter Wortinformationen eine Anweisungs-E-Mail verfassen kann,
e. Anweisungsgewinnungsmittel (16) zum Analysieren des Inhalts eines Satzes einer von einem Spieler geschickten und von besagtem Empfangsmittel (12) empfangenen Anweisungs-E-Mail, wobei besagter Satz derart ist, dass Anweisungsinformationen gewonnen werden;
f. Geschichtenverarbeitungsmittel (18) zum Beurteilen besagten Status besagten Fortschritts besagter Geschichte, der besagtem Spieler entspricht, wobei besagter Spieler durch besagtes Spieleridentifizierungsmittel (16) identifiziert wurde, und zum Verarbeiten einer Entwicklung besagter Geschichte in besagtem Spiel auf der Grundlage besagten beurteilten Status besagten Fortschritts und besagter Anweisungsinformationen;
g. Antwortmail-Verfassungsmittel (19) zum Verfassen einer Antwortmail zum Senden von Informationen als Antwort auf besagte Anweisungsinformationen gemäß besagter von besagtem Geschichtenverarbeitungsmittel (18) verarbeiteter Entwicklung besagter Geschichte; und
h. Antwortmail-Verarbeitungsmittel (20) zum Senden einer von besagtem Antwortmail-Verfassungsmittel (19) verfassten Antwort-E-Mail an besagten von besagtem Spieleridentifizierungsmittel (15) identifizierten Spieler durch besagtes Sendemittel (13).

2. Die Spielmaschine (1) gemäß Anspruch 1, wobei besagte Informationen einer Vielzahl von in besagtem Wortspeichermittel (26) gespeicherten Wörtern besagten Anweisungsinformationen entsprechen, wobei besagtes Anweisungsgewinnungsmittel (16) Satzanalysemittel zum Analysieren besagten Inhalts besagten Satzes besagter empfangener Mail durch Prüfen besagten Inhalts besagten Satzes besagter empfangener Mail und besagter Informationen, die aus einer Vielzahl von besagten Wörtern bestehen, die in besagtem Wortspeichermittel (26) gespeichert ist, aufweist.

3. Die Spielmaschine (1) gemäß Anspruch 1, ferner umfassend Fehlerbeurteilungsmittel (22) zum Beurteilen, dass es besagtem Anweisungsgewinnungsmittel (16) unmöglich ist, besagten Inhalt besagten Satzes besagter empfangener Mail zu analysieren, sowie Fehlermail-Verfassungsmittel (23) zum Verfassen einer Fehlermail, wenn die Unmöglichkeit besagter Analyse besagten Inhalts besagten Satzes besagter empfangener Mail von besagtem Fehlerbeurteilungsmittel (22) beurteilt wird, wobei besagtes Antwortmail-Verarbeitungsmittel (20) besagte von besagtem Fehlermail-Verfassungsmittel (23) verfasste Fehlermail durch besagtes Sendemittel (13) an besagten von besagtem Spieleridentifizierungsmittel (15) identifizierten Spieler schickt.

4. Die Spielmaschine (1) gemäß Anspruch 1, ferner umfassend Antwortzeit-Verarbeitungsmittel (24) zum Berechnen von Zeit zum Senden besagter von besagtem Antwortmail-Verfassungsmittel (19) verfasster Antwortmail auf der Grundlage besagter Entwicklung besagter von besagtem Geschichten-Verarbeitungsmittel (18) verarbeiteter Geschichte und um besagtem Antwortmail-Verarbeitungsmittel (19) zu erlauben, besagte Antwortmail zu senden, wenn besagte Zeit zum Senden erreicht ist.

5. Die Spielmaschine (1) gemäß Anspruch 1, wobei besagtes Antwortmail-Verfassungsmittel (19) besagte Antwortmail verfasst, wobei ein vorbestimmtes Bild auf der Grundlage besagter Entwicklung besagter von besagtem Geschichten-Verarbeitungsmittel (18) verarbeiteter Geschichte angehängt wird.

6. Die Spielmaschine gemäß Anspruch 1, ferner umfassend Web-Verarbeitungsmittel (40) zum Verteilen verschiedener Arten von Informationen, wobei besagtes Web-Verarbeitungsmittel (40) mit besagtem öffentlichen Kommunikationsnetzwerk verbunden ist, und Rangordnungs-Berechnungsmittel (43) zum Berechnen von Rangordnung besagten Spielers in besagtem Spiel auf der Grundlage besagten Status besagten Fortschritts besagter Geschichte für jeden Spieler, der in besagtem Fortschrittsstatus-Steuermittel gespeichert und gesteuert wird, sowie Rangordnungsinformations-Produktionsmittel (42) zum Produzieren besagter von besagtem Rangordnungs-Berechnungsmittel (43) berechneter Rangordnung besagten Spielers als Rangordnungsinformationen, die durch besagtes Web-Verarbeitungsmittel (40) verteilt werden können.

7. Ein Verfahren zum Weiterführen eines Spiels mit
a. einer Vielzahl von Endgeräteeinheiten (3A, 3B, 3C) zum Senden und Empfangen einer E-Mail durch einen Spieler, wobei besagte Endgeräteeinheiten (3A, 3B, 3C) mit einem öffentlichen Kommunikationsnetzwerk verbunden sind, und
b. besagter Spielmaschine (1) gemäß Anspruch 1,
wobei das Verfahren Folgendes umfasst:
c. Produzieren aus einer Vielzahl von Wörtern bestehender Informationen,
d. Veröffentlichen besagter aus einer Vielzahl von Wörtern bestehender Informationen durch einen Webserver (40), so dass ein Spieler besagte Wortinformationen über das Internet (2) erhalten kann und der Spieler eine Anweisungs-E-Mail auf der Grundlage besagter Wortinformationen verfassen kann,
a. Speichern und Steuern eines Status eines Fortschritts einer Geschichte in besagtem Spiel für jeden Spieler durch besagtes Fortschrittsstatus-Steuermittel;
f. Empfangen einer von einem Spieler von einer der besagten Endgeräteeinheiten (3A, 3B, 3C) geschickten Anweisungs-E-Mail;
g. Identifizieren besagten Spielers durch besagtes Spieleridentifizierungsmittel (15) anhand des Ursprungs besagter empfangener Anweisungs-E-Mail;
h. Analysieren des Inhalts eines Satzes besagter empfangener Anweisungs-E-Mail, um durch besagtes Anweisungs-Gewinnungsmittel (16) Anweisungsinformationen zu gewinnen;
f. Beurteilen besagten Status besagten Fortschritts besagter Geschichte, der besagtem Spieler entspricht, der durch besagtes Spieleridentifizierungsmittel (15) identifiziert wurde, und Verarbeiten einer Entwicklung besagter Geschichte in besagtem Spiel auf der Grundlage besagten beurteilten Status besagten Fortschritts und besagter Anweisungsinformationen durch besagtes Geschichten-Verarbeitungsmittel (18);
j. Verfassen einer Antwortmail zum Senden von Informationen als Antwort auf besagte Anweisungsinformationen auf der Grundlage besagten Verarbeitens besagter Entwicklung besagter Geschichte durch besagtes Antwortmail-Verfassungsmittel (19); und
k. Senden besagter von besagtem Antwortmail-Verfassungsmittel (19) verfasster Antwortmail an besagten Spieler, der von besagtem Spieleridentifizierungsmittel (15) identifiziert wurde, von besagtem Antwortmail-Verarbeitungsmittel (20) durch besagtes Sendemittel (13).

8. Das Verfahren zum Weiterführen besagten Spiels gemäß Anspruch 7, wobei besagte Endgeräteeinheit (3A, 3B) ein Mobiltelefon ist.

## Revendications

1. Dispositif (1) de jeu conçu pour un système de jeu du type client-serveur, ledit dispositif
(1) de jeu ayant un moyen (12) de réception permettant de recevoir un courrier électronique, et un moyen (13) d'envoi permettant d'envoyer un courrier électronique, ledit dispositif (1) de jeu étant relié à un réseau de communication public, le dispositif (1) de jeu comprenant :
a. un moyen de contrôle de l'état de progression permettant de stocker et de contrôler un état de progression d'une histoire dans un jeu pour chaque joueur ;
b. un moyen (15) d'identification du joueur permettant d'identifier un joueur à partir d'une provenance d'un courrier électronique envoyé par ledit joueur et reçu par ledit moyen (12) de réception ;
c. un moyen (14) de production d'informations de mots à distribuer permettant de produire une information consistant en une pluralité de mots, ladite information étant stockée dans un moyen (26) de stockage de mots correspondant,
d. un serveur (40) Web permettant de délivrer ladite information de mots de sorte qu'un joueur puisse obtenir ladite information de mots via l'internet (2), qui est une instance dudit réseau de communication public, et que le joueur puisse préparer un courrier électronique d'instruction sur la base de ladite information de mots,
e. un moyen (16) d'obtention d'instructions permettant d'analyser des contenus d'un message d'un courrier électronique d'instruction envoyé par un joueur et reçu par ledit moyen (12) de réception, ledit message étant fait de manière à être obtenu en tant qu'information d'instruction;
f. un moyen (18) de traitement de l'histoire permettant d'évaluer ledit état de ladite progression de ladite histoire correspondant audit joueur, ledit joueur étant identifié par ledit moyen (16) d'identification du joueur, et permettant de traiter un développement de ladite histoire dans ledit jeu à partir dudit état évalué de ladite progression et de ladite information d'instruction ;
g. un moyen (19) de préparation de courriers de réponse permettant de préparer un courrier de réponse afin d'envoyer une information en réponse à ladite information d'instruction en fonction dudit développement de ladite histoire traité par ledit moyen (18) de traitement de l'histoire ; et
h. un moyen (20) de traitement de courriers de réponse permettant d'envoyer, via ledit moyen (13) d'envoi, un courrier de réponse préparé par ledit moyen (19) de préparation de courriers de réponse audit joueur identifié par ledit moyen (15) d'identification du joueur.

2. Dispositif (1) de jeu selon la revendication 1, dans lequel ladite information consistant en une pluralité de mots stockée dans ledit moyen (26) de stockage de mots correspond à ladite information d'instruction, ledit moyen (16) d'obtention d'instructions ayant un moyen d'analyse de messages permettant d'analyser lesdits contenus dudit message dudit courrier électronique reçu en vérifiant lesdits contenus dudit message dudit courrier reçu et de ladite information consistant en une pluralité desdits mots, qui est stockée dans ledit moyen (26) de stockage de mots correspondant.

3. Dispositif (1) de jeu selon la revendication 1, comprenant en outre un moyen (22) d'évaluation d'erreurs permettant d'évaluer qu'il est impossible audit moyen (16) d'obtention d'instructions d'analyser lesdits contenus dudit message dudit courrier électronique reçu, et un moyen (23) de préparation de courriers d'erreur permettant de préparer un courrier d'erreur si l'impossibilité de ladite analyse desdits contenus dudit message dudit courrier électronique reçu est constatée par ledit moyen (22) d'évaluation d'erreurs, ledit moyen (20) de traitement de courriers de réponse envoyant, via ledit moyen (13) d'envoi, ledit courrier d'erreur préparé par ledit moyen (23) de préparation de courriers d'erreur audit joueur identifié par ledit moyen (15) d'identification du joueur.

4. Dispositif (1) de jeu selon la revendication 1, comprenant en outre un moyen (24) de traitement du temps de réponse permettant de calculer le temps nécessaire pour envoyer ledit courrier de réponse préparé par ledit moyen (19) de préparation de courriers de réponse sur la base dudit développement de ladite histoire traité par ledit moyen (18) de traitement de l'histoire, et permettant audit moyen (19) de traitement de l'histoire d'envoyer ledit courrier de réponse quand arrive le temps de l'envoyer.

5. Dispositif (1) de jeu selon la revendication 1, dans lequel ledit moyen (19) de préparation de courriers de réponse prépare ledit courrier de réponse en ajoutant une image prédéterminée, qui y est attachée, sur la base dudit développement de ladite histoire traité par ledit moyen (18) de traitement de l'histoire.

6. Dispositif de jeu selon la revendication 1, comprenant en outre un moyen (40) de traitement Web permettant de distribuer de différents types d'informations, ledit moyen (40) de traitement Web étant relié audit réseau de communication public, et un moyen (43) de calcul du classement permettant de calculer le classement dudit joueur dans ledit jeu à partir dudit état de ladite progression de ladite histoire pour chaque joueur, qui est stocké dans et contrôlé par ledit moyen de contrôle de l'état de progression, et un moyen (42) de production d'informations sur le classement permettant de produire ledit classement dudit joueur calculé par ledit moyen (43) de calcul de classement en tant qu'information sur le classement pouvant être distribuée via ledit moyen (40) de traitement Web.

7. Procédé de gestion de la progression d'un jeu ayant
a. une pluralité d'unités (3A, 3B, 3C) terminales permettant d'envoyer et de recevoir un courrier électronique par un joueur, lesdites unités (3A, 3B, 3C) terminales étant reliées à un réseau de communication public, et
b. ledit dispositif (1) de jeu selon la revendication 1,
le procédé comprenant :
c. la production d'une information consistant en une pluralité de mots,
d. la publication de ladite information consistant en un pluralité de mots au moyen d'un serveur (40) Web de sorte qu'un joueur puisse obtenir ladite information de mots via l'internet (2), et que le joueur puisse préparer un courrier électronique d'instruction sur la base de ladite information de mots,
e. le stockage et le contrôle d'un état de progression d'une histoire dans ledit jeu pour chaque joueur par ledit moyen de contrôle de l'état de progression ;
f. la réception d'un courrier électronique d'instruction envoyé par un joueur à partir d'une desdites unités (3A, 3B, 3C) terminales ;
g. l'identification dudit joueur par ledit moyen (15) d'identification du joueur à partir de la provenance dudit courrier électronique d'instruction reçu;
h. l'analyse de contenus d'un message dudit courrier électronique d'instruction reçu de manière à l'obtenir en tant qu'information d'instruction par ledit moyen (16) d'obtention d'instruction ;
i. l'évaluation dudit état de ladite progression de ladite histoire correspondant audit joueur, qui a été identifié par ledit moyen (15) d'identification du joueur, et traitement d'un développement de ladite histoire dans ledit jeu à partir dudit état évalué de ladite progression et de ladite information d'instruction par ledit moyen (18) de traitement de l'histoire ;
j. la préparation d'un courrier de réponse afin d'envoyer une information en réponse à ladite information d'instruction sur la base dudit traitement dudit développement de ladite histoire par ledit moyen (19) de préparation de courriers de réponse ; et
k. l'envoi, via ledit moyen (13) d'envoi, dudit courrier de réponse préparé par ledit moyen (19) de préparation de courriers de réponse audit joueur, qui a été identifié par ledit moyen (15) d'identification du joueur, par ledit moyen (20) de traitement du courrier de réponse.

8. Procédé de gestion de la progression dudit jeu selon la revendication 7, dans lequel ladite unité (3A, 3B) terminale est un téléphone portable.
